# EUROPEAN PATENT SPECIFICATION

(11) **EP 4 108 885 B1**
(45) Date of publication and mention of the grant of the patent: **04.11.2026**
(21) Application number: 22175591.1
(22) Date of filing: 26.05.2022
(51) Int. Cl.: F01D 11/00, F01D 11/12

(54) **SEALING STRUCTURE AND SEALING SYSTEM FOR GAS TURBINE ENGINE**
DICHTUNGSSTRUKTUR UND DICHTUNGSSYSTEM FÜR EINEN GASTURBINENMOTOR
STRUCTURE D'ÉTANCHÉITÉ ET SYSTÈME D'ÉTANCHÉITÉ POUR MOTEUR À TURBINE À GAZ

(30) Priority: 25.06.2021 ES 202130601
(43) Date of publication of application: 28.12.2022
(73) Proprietor: ITP NEXT GENERATION TURBINES, S.L., 48170 Zamudio, Vizcaya (ES)
(72) Inventor: Unanue, Iker, Derby, DE24 8BJ (GB)
(74) Representative: ABG Intellectual Property Law, S.L.

(56) References cited:
- US-A1- 2015 322 808
- US-A1- 2018 355 744
- US-A1- 2020 063 594
- US-B2- 10 443 418
- US-B2- 10 718 352

## Description

### Field

The present invention relates to a sealing structure and a sealing system, and in particular to a sealing structure and a sealing system for a gas turbine engine.

### Background

A gas turbine engine typically includes a seal that minimises a sealing gap between a rotating portion (e.g., rotating blades) and a stationary portion (e.g., a stator) to ensure stable operating performance of the engine. The seal may prevent fluid leakages between the rotating portion and the stationary portion to reduce or prevent losses, which may otherwise affect an efficiency of the engine.

The seal may typically include an annular first sealing part disposed on the stator. The first sealing part may interface with a corresponding second sealing part disposed on the rotating portion. The second sealing part typically includes one or more fins. The first sealing part and the second the sealing part may together produce a sealing effect. The first sealing part may typically include an array of polygonal-shaped cells, such as honeycomb-shaped cells. The honeycomb-shaped cells are typically manufactured by welding together thin corrugated metal sheets to form multiple repeating polygonal shapes. The metal sheets are joined at overlapping walls of the polygonal shapes.

The overlapping walls may result in double-walled structures that are typically aligned with a rubbing direction of the one or more fins of the second sealing part. The double-walled structures may lead to additional material in the first sealing part, thereby increasing an overall weight of the first sealing part. Further, this may lead to excessive heat generation due to rubbing contact that may reduce a life of the fins. Furthermore, conventional manufacturing methods may not allow elimination of the double-walled structures. Also, the conventional manufacturing methods may limit the shape of cells that can be used with the first sealing part.

Furthermore, rubbing contact between the first sealing part and the fins may cause the first sealing part to undergo wear. Such wear may be exacerbated by certain engine running conditions. The metal sheets may typically have a uniform thickness, a high density and a good mechanical strength. As a consequence, wear mechanisms of the first sealing part may tend to eventually result in material compaction. Rubbing with compacted material may lead to undesirable rubbing performance during operation. Further, the first sealing part may deform or smear in a manner that produces high peak loads and temperatures. Such high peak loads and temperatures may reduce a life of the rotating portion or require fins to be protected with a suitable coating. This may increase an overall cost of the seal.

United States patent application US 2018/0355744 A1 discloses an abradable structure for a turbomachine that is designed to be at least partially deformed and/or at least partially abraded by at least one abrading element of the turbomachine during operation thereof; the at least one abradable structure being formed at least regionally of structural elements that have a respective polygonal cross section that is oriented in a rub direction of the abradable structure. The structural elements have a greater extent in the rub direction than in a direction of the abradable structure that is orthogonal to the rub direction. The rubbing contact and sealing properties are determined by the geometry of the cells of the structure and those cells are greater than 130 µm.

Document US2020063594A1 discloses ducts with additive manufactured seals.

Document US10718352B2 discloses multi-cellular abradable liners.

Document US10443418B2 discloses seal carriers for a turbomachine, in particular a gas turbine.

Document US2015322808A1 discloses seals and methods for producing a seal and turbomachine.

Document US2018355744A1 discloses abradable structures for a turbomachine, turbomachines having an abradable structure, and methods for manufacturing an abradable structure.

### Summary

The present invention provides a sealing structure, a sealing system, and a gas turbine engine as set out in the appended claims.

According to a first aspect there is provided a sealing structure for a gas turbine engine according to claim 1.

The sealing structure includes a plurality of cells connected to each other. Each cell extends along a longitudinal axis and includes a cell plane orthogonal to the longitudinal axis. Each cell includes a plurality of walls extending along the longitudinal axis. The plurality of walls defines a polygonal shape therebetween in the cell plane. The polygonal shape includes a plurality of edges and a plurality of vertices. The polygonal shape defines a cell area in the cell plane. Each wall defines a corresponding edge from the plurality of edges. Each wall is connected to an adjacent wall from the plurality of walls at a corresponding vertex from the plurality of vertices. Each wall is shared by two adjacent cells from the plurality of cells, such that each wall defines corresponding edges of the two adjacent cells. Each cell is connected to a set of adjacent cells from the plurality of cells at corresponding vertices from the plurality of vertices of the polygonal shape, such that each cell and the set of adjacent cells form a plurality of connections at the corresponding vertices. The plurality of connections forms a total overlap area between each cell and the set of adjacent cells. The total overlap area is less than or equal to 10% of the cell area.

A conventional sealing structure may include an array of cells with polygonal shapes formed by welding together corrugated metal sheets. Therefore, the array of cells may have double walls, i.e., two walls engaging each other at the location of welds. The double walls may lead to additional material in the sealing structure. The sealing structure of the present invention includes the plurality of walls such that each wall is shared by two adjacent cells from the plurality of cells, thereby eliminating any double walls in the sealing structure. Thus, the sealing structure having single-walled cells may allow rubbing contact with a uniform amount of material. This may reduce the amount of heat generated during rubbing as compared to conventional double-walled structures where rubbing occurs against a larger amount of material. As a result, single-walled cells of the present invention may eliminate or inhibit undesirable rubbing behaviour, and thereby improve a life of the sealing system.

Additionally, each cell is connected to the set of adjacent cells at corresponding vertices of the polygonal shape forming the plurality of connections at the corresponding vertices. This may restrict the overlap between the adjacent cells to the plurality of connections only, thereby reducing the overlap between the adjacent cells. Reduction in overlap between the adjacent cells may allow reduction in rubbing contact area or surface of the sealing structure. Reduction in rubbing contact area may further reduce the amount of heat generated due to the rubbing contact. The total overlap area between each cell and the set of adjacent cells may depend only on the plurality of connections. In the sealing system of the present invention, the total overlap area is less than or equal to 10% of the cell area where cell area is the region bounded by the plurality of edges of the polygonal shape. The total overlap area may therefore be a small fraction (i.e., ≤ 10%) of the cell area. The rubbing contact area of each cell of the present invention may be substantially less as compared to conventional cell structures that have substantially high overlap, for example, greater than 30% of a corresponding cell area. Due to a large number of cells generally present in the sealing structure, an overall rubbing contact area of the sealing structure of the present invention may be substantially less than that of conventional sealing parts.

In some embodiments, the plurality of walls includes four walls, such that the polygonal shape is a quadrilateral including four edges and four vertices. The quadrilateral shape may reduce the number of connections between each cell and the set of adjacent cells, thereby further reducing the total overlap area corresponding to each cell and the overall rubbing contact area of the sealing structure.

In some embodiments, the quadrilateral shape is a rhombus including a major dimension between two first opposing vertices and a minor dimension between two second opposing vertices, such that the major dimension is greater than the minor dimension. In other words, the plurality of cells may include a greater extent or dimension in a rub direction than in a direction orthogonal to the rub direction in the cell plane. Thus, the amount of material of the sealing structure in rubbing contact may reduce significantly as compared to conventional multi-celled parts due to the reduction in a total thickness of the walls in rubbing contact. This may enhance favourable rubbing behaviour. Further, reducing the rubbing contact area or surface may reduce the forces and temperatures generated during rubbing.

In some embodiments, an angle between adjacent edges at each of the first opposing vertices is from about 45 degrees to about 75 degrees. The angle between the adjacent edges may be selected based on application and/or manufacturing requirements.

In some embodiments, each cell is connected to eight adjacent cells at four connections. Each connection is formed by four intersecting walls connected to each other. The four intersecting walls define an overlap area in the cell plane between four cells. A sum of the overlap areas at the four connections is equal to the total overlap area between each cell and the eight adjacent cells. In some embodiments, the overlap area has a quadrilateral shape. Each cell may be connected to the eight adjacent cells at the four connections only and each connection may be formed by four intersecting walls only. The four intersecting walls may define the overlap area that is common between the four intersecting walls. The sum of these overlap areas at the corresponding connections may be equal to the total overlap area. Each wall may be therefore connected to adjacent walls at only opposing ends of the wall. A length of each wall between the opposing ends may therefore be free of any overlap or connection.

In some embodiments, each connection is formed between each cell and some adjacent cells from the set of adjacent cells. A set of intersecting walls of each cell and the some adjacent cells form a corresponding connection from the plurality of connections. The set of intersecting walls define an overlap area in the cell plane at the corresponding connection. A sum of the overlap areas at the plurality of connections is equal to the total overlap area between each cell and the set of adjacent cells. Each wall may be therefore connected to adjacent walls at only opposing ends of the wall. A length of each wall between the opposing ends may therefore be free of any overlap or connection.

In some embodiments, the total overlap area is less than or equal to 4% of the cell area. The total overlap area is significantly reduced as compared to the overlap between adjacent cells of a conventional multi-celled part.

In some embodiments, each wall has a planar cross-sectional shape in the cell plane. The planar cross-sectional shape includes two opposing edges defining the corresponding edges of the two adjacent cells.

In some embodiments, each wall has an average wall thickness that is less than or equal to 130 microns. A minimum value of the average wall thickness of each wall may be limited by a manufacturing method used to produce the wall. The sealing structure of the present invention may be produced using additive manufacturing methods that may allow reduction in the average wall thickness. Reduction in the average wall thickness may further allow lower heat generation during rubbing contact.

In some embodiments, the plurality of cells is additively manufactured. Use of additive manufacturing may allow the sealing structure to be manufactured as a single-piece component, and thus, reduce the production time and costs as compared to conventional multi-component sealing parts. Further, use of additive manufacturing may permit substantial design flexibility with respect to the types of polygonal shapes that can be manufactured and used with the sealing structure of the present invention. In particular, additive manufacturing may allow adjacent cells of the sealing structure to have common or shared walls. Further, conventional manufacturing methods may not allow cells to be manufactured with common walls.

By forming the plurality of cells using additive manufacturing, the double walls between the cells may be eliminated. Therefore, the sealing structure formed by the plurality of cells disposed adjacent to each other may be lighter in weight and may have a lesser material volume as compared to conventional sealing parts. Further, forming the sealing structure using the plurality cells may provide a greater degree of flexibility in terms of design and/or fabrication of the sealing structure. For example, individual cells may be optimized as per application requirements.

In the invention, each wall defines a plurality of pores such that the porosity of each wall is from about 5% to about 20% of a total volume of the corresponding wall. The pores may be formed as a result of the additive manufacturing process.

In the invention, each wall further defines a first major surface and a second major surface opposite to the first major surface. At least one of the plurality of pores of each wall extends at least partially from one of the first and second major surfaces to the other one of the first and second major surfaces, such that a volume of the wall corresponding to a pore is hollow between the first major surface and the second major surface.

The plurality of pores in each wall may promote fracture wear of the sealing structure in comparison to conventional metal sheets, and therefore, reduce smearing. The porosity of each wall may be chosen such that the sealing structure may promote fracture wear while maintaining the integrity of the sealing structure. This may reduce wear of components (e.g., fins) that rub against the sealing structure, and therefore, may eliminate the need to apply protective coatings on such components.

In some embodiments, the sealing structure further includes a plate, and the plurality of cells is disposed on the plate. The plate may provide support to the sealing structure and allow the sealing structure to be connected to other components of a sealing system.

According to a second aspect, there is provided a sealing system for a gas turbine engine. The sealing system includes a rotating part including a sealing portion. The sealing system further includes a stationary part including the sealing structure of the first aspect. Each cell includes an abradable surface in the cell plane configured to interface with the sealing portion. The sealing structure of the present invention may be advantageously used in the sealing system of the gas turbine engine.

According to a third aspect, there is provided a gas turbine engine including the sealing system of the second aspect.

In some embodiments, the rotating part is a rotor disc and the sealing portion includes one or more fins extending from the rotor disc. The stationary part is a stator including a platform and an annular array of stator vanes extending from the platform. The sealing structure is coupled to the platform and is configured to interface with the one or more fins.

In some embodiments, the rotating part is a rotor blade and the sealing portion is disposed on a radially outer surface of the rotor blade. The stationary part is a casing and the sealing structure is coupled to an outer surface of the casing and is configured to interface with the sealing portion.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a schematic sectional side view of a sealing system for a gas turbine engine, according to an embodiment of the present invention;
**Figure 3** is a schematic sectional side view of a sealing system, according to another embodiment of the present invention;
**Figure 4** is a schematic perspective view of a sealing structure, according to an embodiment of the present invention;
**Figure** 5 is a sectional top view of a portion of the sealing structure of Figure 4, according to an embodiment of the present invention;
**Figure** 6 is an enlarged sectional top view of a portion of the sealing structure of Figure 5, according to an embodiment of the present invention;
**Figures 7A** illustrates a cross-section of walls of a cell of a sealing structure, according to an embodiment of the present invention;
**Figures 7B** illustrates a cross-section of walls of a cell of a sealing structure, according to another embodiment of the present invention; and
**Figure** 8 illustrates a cross-section of walls of a cell of a sealing structure, according to another embodiment of the present invention.

### Detailed description

Aspects and embodiments of the present invention will now be discussed with reference to the accompanying figures. Further aspects and embodiments will be apparent to those skilled in the art.

As used herein, a component extends "axially" relative to an axis if the component extends along the axis. A component extends "circumferentially" relative to an axis if the component extends in a circumferential direction defined around the axis. A component extends "radially" relative to an axis if the component extends radially inward or outward relative to the axis. If a first component is disposed "radially outward" of a second component, the first component is disposed at a greater radial distance from an axis as compared to the second component. If a first component is disposed "radially inward" of a second component, the first component is disposed at a less radial distance from an axis as compared to the second component. A "radially inner surface" of a component is a surface that is located at a less radial distance from an axis as compared to a "radially outer surface" of the component.

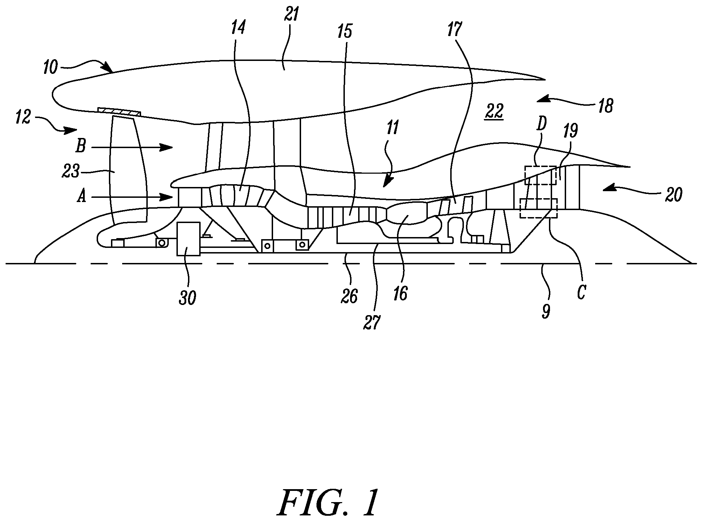

**Figure** 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the core exhaust nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Accordingly, the present invention extends to a gas turbine engine having any arrangement of gearbox styles (for example star or planetary), support structures, input and output shaft arrangement, and bearing locations.

Optionally, the gearbox 30 may drive additional and/or alternative components (e.g., the intermediate pressure compressor and/or a booster compressor).

Other gas turbine engines to which the present invention may be applied may have alternative configurations. For example, such engines may have an alternative number of compressors and/or turbines and/or an alternative number of interconnecting shafts. By way of further example, the gas turbine engine 10 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction X (which is aligned with the principal rotational axis 9), a radial direction R (in the bottom-to-top direction), and a circumferential direction C (perpendicular to the page). The axial, radial and circumferential directions X, R, C are mutually perpendicular.

In addition, the present invention is equally applicable to aero gas turbine engines, marine gas turbine engines and land-based gas turbine engines.

Each of the high pressure turbine 17 and the low pressure turbine 19 of the gas turbine engine 10 may include one or more rows of stators (not shown in Figure 1) alternating with one or more rows of rotors (not shown in Figure 1). A stator and a rotor immediately downstream of the stator may form a stage. The stator may include an annular array of radially extending stator vanes. The rotor may include an annular array of radially extending rotor blades mounted to a rotor disc. The combustion gases impinge on the stator vanes which present the gases at an appropriate angle to efficiently drive the rotor blades. The one or more rows of stators and one or more rows of rotors may form a blade assembly for the gas turbine engine 10.

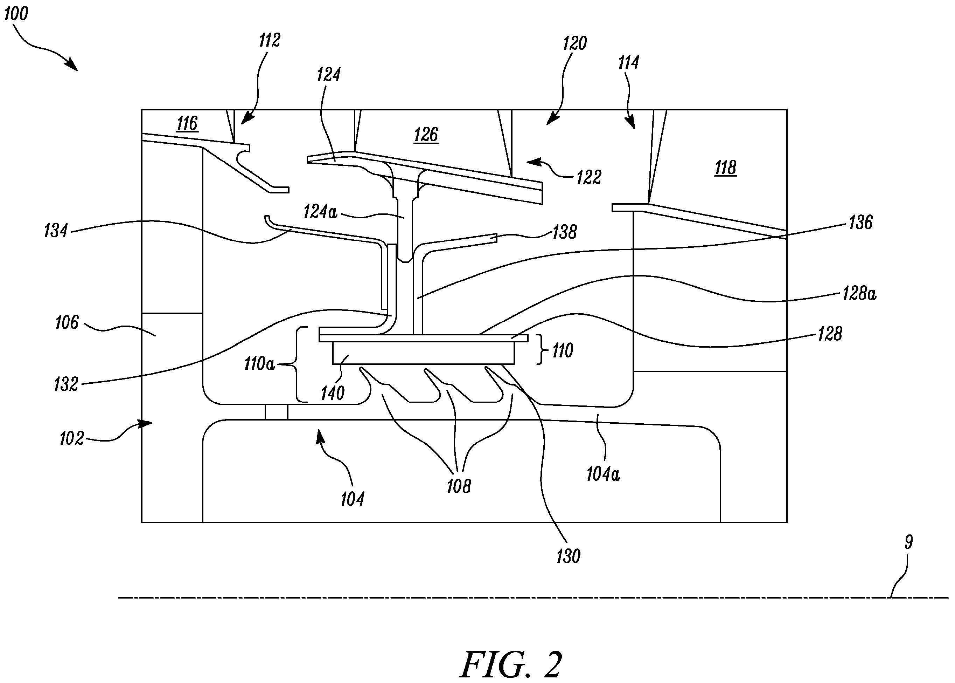

**Figure** 2 illustrates a sealing system 100 for the gas turbine engine 10 (shown in Figure 1) in accordance with an embodiment of the present invention. In some embodiments, Figure 2 may correspond to a detail C shown in Figure 1. Specifically, Figure 2 is an enlarged partial sectional side view of the gas turbine engine 10 including the sealing system 100. The gas turbine engine 10 is interchangeably referred to hereinafter as the engine 10. In some embodiments, the gas turbine engine 10 may be an aero gas turbine engine, a marine gas turbine engine or a land-based gas turbine engine that includes the sealing system 100.

The sealing system 100 includes a rotating part 102 including a sealing portion 104. The rotating part 102 is configured to rotate about the principal rotational axis 9. In the illustrated embodiment of Figure 2, the rotating part 102 is a rotor disc 106. In some embodiments, the engine 10 includes a first rotor stage 112 and a second rotor stage 114. The first rotor stage 112 includes an annular array of first rotor blades 116 extending from the rotor disc 106. The second rotor stage 114 includes an annular array of second rotor blades 118 extending from the rotor disc 106 and disposed downstream of the first rotor blades 116.

The engine 10 further includes a stationary part 120. In the illustrated embodiment of Figure 2, the stationary part 120 is a stator 122 including a platform 124 and an annular array of stator vanes 126 extending from the platform 124. The stator 122 is disposed axially between the first rotor stage 112 and the second rotor stage 114. In some embodiments, the stator 122 further includes a vane inner rail 124a extending radially inward from the platform 124 of the stator 122.

In some embodiments, the sealing portion 104 includes one or more fins 108 extending from the rotor disc 106. Specifically, the sealing portion 104 includes a sealing ring 104a coupled to the rotor disc 106. In some embodiments, the sealing ring 104a also rotates about the principal rotational axis 9 along with the rotor disc 106. The one or more fins 108 extend from the sealing ring 104a. Specifically, the one or more fins 108 extend radially outwards from the sealing portion 104. In some embodiments, the sealing ring 104a is disposed axially between the first rotor stage 112 and the second rotor stage 114.

The stator 122 includes a sealing structure 110. The sealing structure 110 forms an annular seal 110a against the sealing ring 104a of the sealing portion 104. The sealing structure 110 is coupled to the platform 124 and is configured to interface with the one or more fins 108. In some embodiments, the sealing system 100 may include a labyrinth seal. In some embodiments, the annular seal 110a forms an interstage seal between the first rotor stage 112 and the second rotor stage 114 of the engine 10.

In some embodiments, the one or more fins 108 extend towards the sealing structure 110. The one or more fins 108 provide a seal against the sealing structure 110 of the sealing system 100. The annular seal 110a may create a resistance to cooling fluid flow by forcing the cooling fluid to traverse through the one or more fins 108. The sealing system 100 may aim to minimise the performance penalties from the cooling fluid leaking across the stator 122.

In some embodiments, the sealing structure 110 of the sealing system 100 may be coupled to the platform 124 of the stator 122 by one or more suitable attachment mechanisms, for example, mechanical fasteners, welding, tongue and groove connection, brazing, adhesives, and the like. In the illustrated embodiment of Figure 2, the sealing structure 110 has an annular shape and has a circumferential extent of 360 degrees around the principal rotational axis 9 of the engine 10.

The sealing structure 110 includes a multi-celled portion 140. The multi-celled portion 140 includes a plurality of cells (not shown in Figure 2). The multi-celled portion 140 may have a honeycomb configuration. In some embodiments, each cell has a polygonal shape. Each cell may be, but not limited to, hexagonal, octagonal, pentagonal, or quadrilateral. In some embodiments, sidewalls of each cell from the plurality of cells may have an equal length. In some other embodiments, the sidewalls of each cell may have unequal lengths.

In some embodiments, the sealing structure 110 further includes a plate 128. In some embodiments, the multi-celled portion 140 is disposed on the plate 128. Specifically, the plurality of cells of the multi-celled portion 140 is disposed on the plate 128. In some embodiments, the plate 128 is a single integral part having an annular shape and a circumferential extent of 360 degrees around the principal rotational axis 9. In some embodiments, the plurality of cells of the multi-celled portion 140 may be formed integrally with the plate 128. In some other embodiments, the plate 128 may be coupled to the plurality of cells by one or more suitable attachment mechanisms, for example, mechanical fasteners, welding, tongue and groove connection, brazing, adhesives, and the like. The plate 128 includes a radially outer surface 128a adjacent the platform 124.

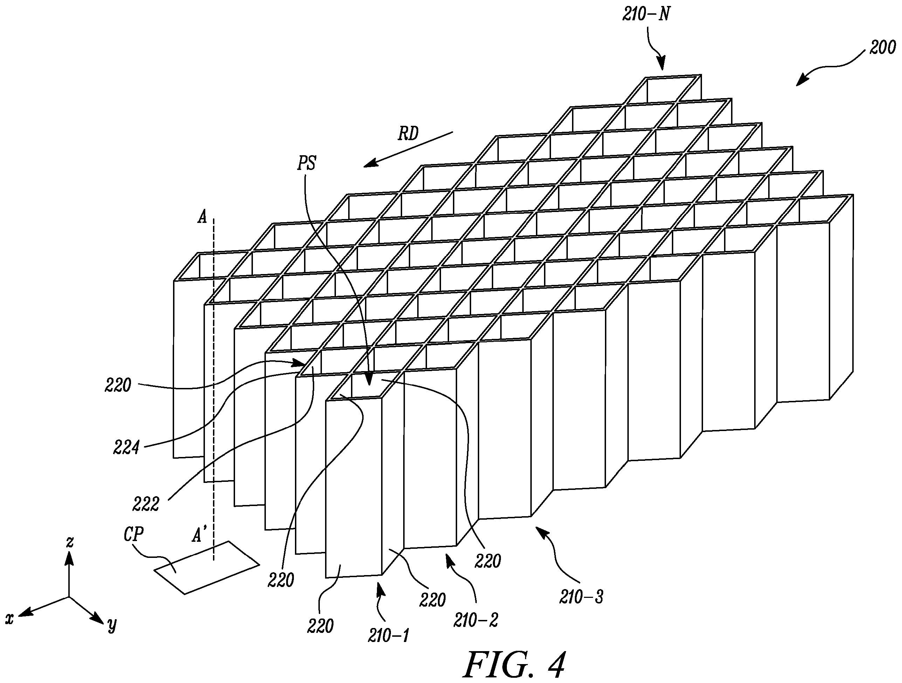

In some embodiments, each cell from the plurality cells includes an abradable surface 130 in a cell plane CP (shown in Figure 4) configured to interface with the sealing portion 104. During operation of the engine 10, as the rotor disc 106 rotates about the principal rotational axis 9, the abradable surface 130 may allow a rubbing contact with the sealing portion 104, and thus, with the one or more fins 108. Specifically, the one or more fins 108 rub into the abradable surface 130 disposed adjacent the sealing portion 104. In other words, the one or more fins 108 act as abrading elements against the abradable surface 130. Thus, the sealing portion 104 and the sealing structure 110 may together produce a sealing action. In some embodiments, the sealing portion 104 may rub into the abradable surface 130 when the rotating part 102 expands in response to centrifugal forces or high temperatures. In some cases, the sealing portion 104 may rub into the abradable surface 130 upon a start-up of the engine 10. This may advantageously reduce or prevent a leakage during operation of the engine 10.

In some embodiments, the abradable surface 130 is designed to be at least partially deformed and, additionally or alternatively, to be at least partially abraded by the one or more fins 108 of the sealing portion 104 in response to a rubbing contact process between the sealing structure 110 and the one or more fins 108 during operation of the engine 10. Thus, during operation of the engine 10, at least some of the cells from the plurality of cells may deform and, additionally or alternatively, abraded, to keep a gap between the sealing structure 110 and the sealing portion 104 as small as possible and, accordingly, be able to operate the engine 10 at a high level of efficiency. In some embodiments, the sealing structure 110 may include pre-defined light regions disposed in several planes, which may run approximately parallel to the radially outer surface 128a of the plate 128.

In some embodiments, the sealing system 100 further includes a front leg 132 extending at least radially outwards from the radially outer surface 128a of the plate 128. In the illustrated embodiment of Figure 2, the front leg 132 is at least partially disposed on the radially outer surface 128a of the plate 128. In some embodiments, the front leg 132 is a single integral part having an annular shape and a circumferential extent of 360 degrees around the principal rotational axis 9. In some embodiments, the front leg 132 may be coupled to the plate 128 by one or more suitable attachment mechanisms, for example, mechanical fasteners, welding, tongue and groove connection, brazing, adhesives, and the like.

In some embodiments, the sealing system 100 further includes a flow control arm 134 extending at least axially from the front leg 132. The flow control arm 134 is radially spaced apart from the plate 128. In some embodiments, the flow control arm 134 extends at least radially towards the first rotor stage 112. In some embodiments, the flow control arm 134 is inclined obliquely relative to the principal rotational axis 9. In the illustrated embodiment of Figure 2, the flow control arm 134 may be inclined in an upward direction relative to the principal rotational axis 9. In some other embodiments, the flow control arm 134 may be inclined in a downward direction relative to the principal rotational axis 9. The flow control arm 134 may therefore extend both radially and axially relative to the front leg 132 of the sealing system 100.

In some embodiments, the flow control arm 134 is a single integral part having an annular shape and a circumferential extent of 360 degrees around the principal rotational axis 9. In some embodiments, the flow control arm 134 may be coupled to the front leg 132 by one or more suitable attachment mechanisms, for example, mechanical fasteners, welding, tongue and groove connection, brazing, adhesives, and the like. In some other embodiments, the flow control arm 134 may be integral with the front leg 132. In some embodiments, the flow control arm 134 may control a flow of fluid through between the first rotor stage 112 and the second rotor stage 114.

In some embodiments, the sealing system 100 further includes a rear leg 136 axially spaced apart from the front leg 134. In some embodiments, the rear leg 136 extends radially with respect to the plate 128. In the illustrated embodiment of Figure 2, the rear leg 136 extends at least radially outwards from the radially outer surface 128a of the plate 128. In some embodiments, the rear leg 136 is a single integral part having an annular shape and a circumferential extent of 360 degrees around the principal rotational axis 9. In some embodiments, the rear leg 136 may be coupled to the plate 128 by one or more suitable attachment mechanisms, for example, mechanical fasteners, welding, tongue and groove connection, brazing, adhesives, and the like.

In some embodiments, the sealing system 100 further includes a rear flow control arm 138 extending axially from the rear leg 136. In some embodiments, the rear flow control arm 138 is a single integral part having an annular shape and a circumferential extent of 360 degrees around the principal rotational axis 9. In some embodiments, the rear flow control arm 138 may be integral with the rear leg 136. In some other embodiments, the rear flow control arm 138 may be coupled to the rear leg 136 by one or more suitable attachment mechanisms, for example, mechanical fasteners, welding, tongue and groove connection, brazing, adhesives, and the like.

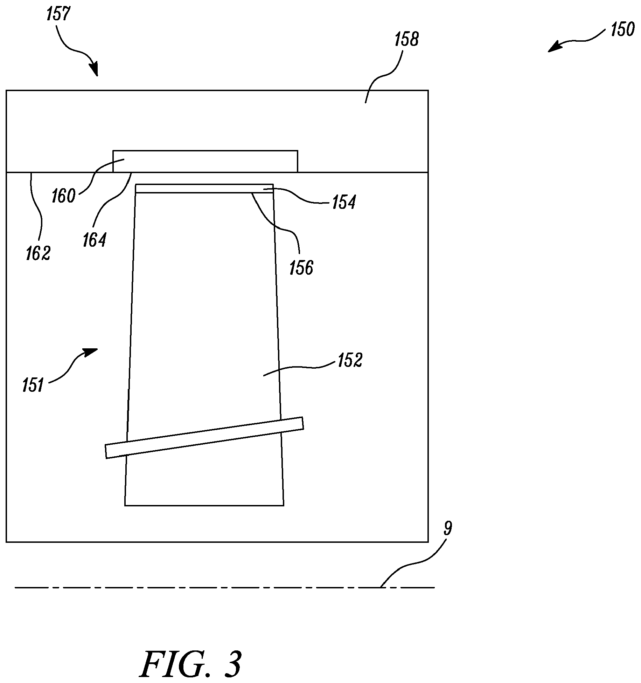

**Figure** 3 is a schematic view of a sealing system 150 for the gas turbine engine 10 (shown in Figure 1) in accordance with an embodiment of the present invention. Some components of the sealing system 150 may be omitted in Figure 3 for the purpose of illustration. In some embodiments, Figure 3 may correspond to a detail D shown in Figure 1. The sealing system 150 includes a rotating part 151. In the illustrated embodiment of Figure 3, the rotating part 151 is a rotor blade 152. In some embodiments, the rotor blade 152 may extend annularly from a rotor disc (e.g., the rotor disc 106 of Figure 2) of the turbine engine 10. The rotor blade 152 is configured to rotate about the principal rotational axis 9 of the engine 10.

The rotor blade 152 includes a sealing portion 154. In some embodiments, the sealing portion 154 may be substantially equivalent to the sealing portion 104 of Figure 2. The sealing portion 154 is disposed on a radially outer surface 156 of the rotor blade 152. In some embodiments, the sealing portion 154 includes one or more fins (not shown) radially extending from the radially outer surface 156 of the rotor blade 152.

The sealing system 150 further includes a stationary part 157. In the illustrated embodiment of Figure 3, the stationary part 157 is a casing 158. In some embodiments, the casing 158 has an annular shape and has a circumferential extent of 360 degrees around the principal rotational axis 9 of the engine 10. The casing 158 includes a sealing structure 160. In some embodiments, the sealing structure 160 may be substantially equivalent to the sealing structure 110 of Figure 2.

The sealing structure 160 is coupled to a radially inner surface 162 of the casing 158 and is configured to interface with the sealing portion 154. In some embodiments, the sealing structure 160 may be coupled to the radially inner surface 162 of the casing 158 by one or more suitable attachment mechanisms, for example, mechanical fasteners, welding, tongue and groove connection, brazing, adhesives, and the like.

In some embodiments, the sealing structure 160 includes an abradable surface 164 configured to interface with the sealing portion 154. The abradable surface 164 may be substantially equivalent to the abradable surface 130 of Figure 2. Specifically, the abradable surface 164 may allow a rubbing contact with the sealing portion 154 of the rotor blade 152. In other words, the abradable surface 164 and the sealing portion 154 (including the one or more fins) may rub against one another during operation of the engine 10, thereby forming a seal between the sealing structure 160 and the sealing portion 154.

**Figure 4** is a schematic perspective view of a sealing structure 200 for the gas turbine engine 10 (shown in Figure 1) in accordance with an embodiment of the present invention. The sealing structure 200 may be substantially equivalent to the sealing structures 110, 160, shown in Figures 2 and 3, respectively. Some components of the sealing structure 200 (e.g., the plate 128 of Figure 2) may be omitted in Figure 4 for the purpose of clarity. The sealing structure 200 defines mutually orthogonal x, y, and z-axes. The x and y-axes are in-plane axes of the sealing structure 200, while the z-axis is a transverse axis disposed along a vertical height of the sealing structure 200.

The sealing structure 200 includes a plurality of cells 210-1, 210-2, ..., 210-N (collectively, cells 210) connected to each other, where N is an integer corresponding to a total number of cells (e.g., N = 10, 20, etc.) in the sealing structure 200. Each cell 210 extends along a longitudinal axis A-A' and includes a cell plane CP orthogonal to the longitudinal axis A-A'. The longitudinal axis A-A' extends substantially along the z-axis and the cell plane CP extends substantially along the x-y plane. In other words, the x-y plane is disposed along the cell plane CP of the sealing structure 200, while the z-axis is perpendicular to the cell plane CP of the sealing structure 200.

In some embodiments, the sealing structure 200 includes an array of the cells 210. The array may typically be formed as a repeated pattern of the cells 210 that are shaped similarly. In some embodiments, the cells 210 are substantially identically shaped. Further, the cells 210 may have substantially similar dimensions. Specifically, the cells 210 may be substantially identical to each other. However, in some other embodiments, some cells from the plurality of cells 210 may be different from the other cells in terms of shape and/or dimensions. In some embodiments, the array of the cells 210 may take various forms. For example, the plurality of cells 210 is repeated in the cell plane CP in an ordered arrangement to form the sealing structure 200. The sealing structure 200 may have an overall regular shape or boundary in the cell plane CP, such as a square shape, a rectangular shape, a polygonal shape, etc. In some other embodiments, some of the cells from the plurality of cells 210 may be irregular. Further, some portions of the sealing structure 200 may be irregular in some alternative embodiments. In some embodiments, the cells 210 may be formed in a variety of sizes based on application requirements. Further, some cells from the plurality of cells 210 may have a same size or different sizes.

In some embodiments, the plurality of cells 210 is additively manufactured. For example, the sealing structure 200 is produced layer-by-layer by means of a free-forming method, in particular, an additive method. Additive layer manufacturing (ALM) may allow the sealing structure 200 to be integrally formed as one part. In some other embodiments, the sealing structure 200 may be manufactured using other techniques, such as, node welding, electro discharge machining, etc. It should be understood that the sealing structure 200 may be produced using any known manufacturing process, and the process may vary based on application requirements.

In some embodiments, ALM may include selective laser melting, electron beam melting, blown powder deposition or any other ALM process. By forming the plurality of cells 210 of the sealing structure 200 using ALM, double walls between the cells 210 may be eliminated. Therefore, the sealing structure 200 having the plurality of cells 210 disposed adjacent to each other may be lighter in weight and may have a lesser material volume as compared to conventional sealing components having double-walled structures. In addition, a sealing portion (e.g., the sealing portion 104 shown in Figure 2) in rubbing contact with the sealing structure 200 may erode or abrade less material of the sealing structure 200. This may substantially reduce heat generation and damage to the fins (e.g., the one or more fins 108 shown in Figure 2). In some embodiments, ALM may further eliminate a need for a protective coating on the fins. Further, the shape and size of the cells 210 may be varied conveniently using ALM as per application requirements.

Further, materials used for forming the cells 210 may be varied conveniently using ALM. For example, the material may include one or more of: steel and its alloys, aluminium and its alloys, titanium and its alloys, nickel and its alloys, copper and its alloys, polymers, metal coated polymers, and composite materials. Furthermore, the cells 210 may be built from a model file. Further, the cells 210 may be adapted to suit applications having varying size, shape, weight, and stiffness requirements. In some embodiments, the cells 210 may be manufactured using ALM to suit individual requirements of the applications based on characteristics derived from computer simulations.

Each cell 210 includes a plurality of walls 220 extending along the longitudinal axis A-A'. In some embodiments, the plurality of walls 220 are substantially identical to each other. The plurality of walls 220 defines a polygonal shape PS therebetween in the cell plane CP. The cells 210 of the sealing structure 200 are defined by the polygonal shape PS. In some embodiments, the polygonal shape PS may include, but not limited to, hexagonal shape, octagonal shape, pentagonal shape, or quadrilateral shape. In some embodiments, the polygonal shape PS defined by the plurality of walls 220 is closed and hollow. The polygonal shape PS of the cells 210 extends along the longitudinal axis A-A'. In some embodiments, the plurality of walls 220 of each cell 210 may have an equal length. In some other embodiments, the walls 220 of each cell 210 may have unequal lengths.

In the illustrated embodiment of Figure 4, the plurality of walls 220 includes four walls 220, such that the polygonal shape PS is a quadrilateral. It should be understood that the plurality of walls 220 may include any number of walls, and the polygonal shape PS may vary based on the application requirements. In some embodiments, each wall 220 has a planar cross-sectional shape in the cell plane CP. Specifically, each wall 220 includes a first major surface 222 and an opposing second major surface 224. In some embodiments, each of the first major surface 222 and the second major surface 224 may have a surface roughness. The surface roughness of each of the first and second major surfaces 222, 224 may promote wear locations for facilitating fracture wear. In some other embodiments, some walls from the plurality of walls 220 may have a nonplanar or curved shape.

A rubbing contact between the sealing structure 200 and the sealing portion 104 (shown in Figure 2) may occur in a rub direction RD. In the illustrated embodiment of Figure 4, the rub direction RD is aligned with the x-axis. In some cases, the rub direction RD may be along a circumferential direction defined around the principal rotational axis 9 (shown in Figure 1). In some embodiments, the walls 220 may define light regions at edge zones along the longitudinal axis A-A'. In some embodiments, the light regions may be formed along the longitudinal axis A-A', such that the light regions may result in progressive lightening of a cross-section of the wall 220 of the sealing structure 200. In some cases, the light regions may be discrete light regions that may be adjacent or spaced apart from each other. In some embodiments, the light regions may be formed continuously in the walls 220 of the sealing structure 200. In other words, the light regions are continuously formed along the cells 210 of the sealing structure 200. In some embodiments, the light regions may together form light zones of the sealing structure 200. In some embodiments, the sealing structure 200 may include multiple light zones.

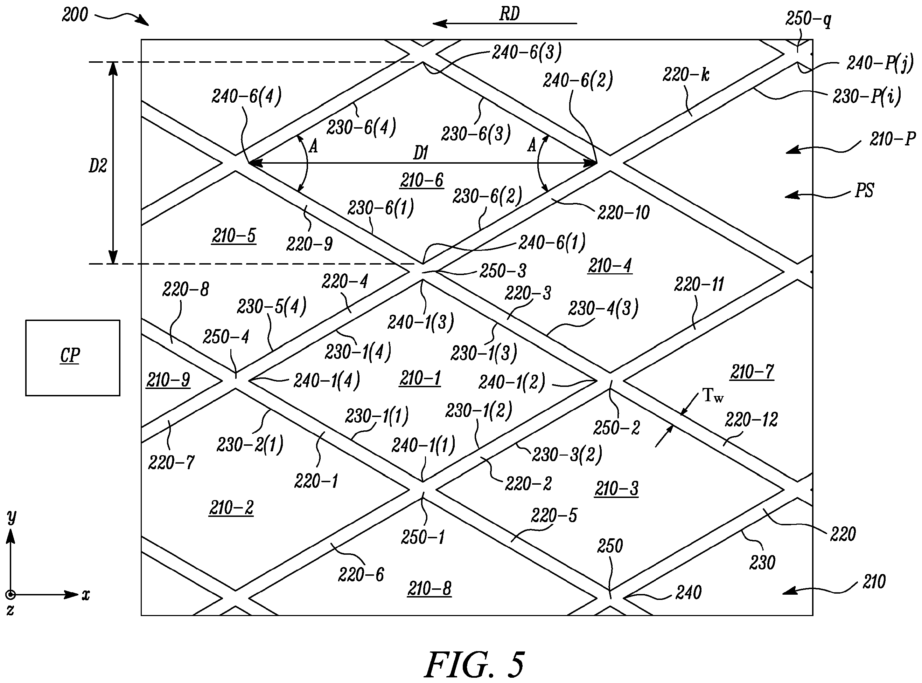

**Figure** 5 is a sectional top view of a portion of the sealing structure 200 in accordance with an embodiment of the present invention. The top view is taken along a plane parallel to the cell plane CP of the sealing structure 200 shown in Figure 4. Specifically, the top view is taken along the x-y plane. Some cells from the plurality of cells 210 are shown in Figure 5 for the purpose of discussion.

Referring to Figure 5, the sealing structure 200 includes the plurality of walls 220-1, 220-2, ..., 220-M (collectively, walls 220) connected to each other, where M is an integer corresponding to a total number of walls (e.g., N = 50, 100, etc.) in the sealing structure 200. The total number of walls 220 is greater than the total number of cells 210 (i.e., M > N). A relationship between the number M and the number N may depend upon a number of sides in the polygonal shape PS. The walls 220 of each cell 210 may be referred to as 220-k, where k is an integer less than or equal to M (k ≤ M). The polygonal shape PS includes a plurality of edges 230-P(i) (collectively, plurality of edges 230) and a plurality of vertices 240-P(j) (collectively, plurality of vertices 240), where P corresponds to the associated cell 210-P (P ≤ N) and i, j depend upon a number of walls associated with the polygonal shape PS. Each wall 220-k from the plurality of walls 220 defines the corresponding edge 230-P(i) from the plurality of edges 230. The edges 230 of each cell 210 may be referred to as 230-P(i). Further, the vertices 240 of each cell 210 may be referred to as 240-P(j).

Each wall 220-k is connected to an adjacent wall 220-l from the plurality of walls 220 at a corresponding vertex 240-P(j) from the plurality of vertices 240. Further, each wall 220-k is shared by two adjacent cells 210-k, 210-l from the plurality of cells 210, such that each wall 220-k defines the corresponding edges 230-P(i) of the two adjacent cells 210-k, 210-l. Each wall 220-k has a substantially planar cross-sectional shape in the cell plane CP. The planar cross-sectional shape includes two opposing edges 230 defining the corresponding edges 230-P(i) of the two adjacent cells 210-k, 210-l.

In the illustrated embodiment of Figure 5, the plurality of walls 220-k includes four walls, such that the polygonal shape PS is a quadrilateral including four edges 230-P(i) and four vertices 240-P(j). Thus, i and j may take any integral value from 1 to 4. Referring to Figure 5, the cell 210-1 includes the plurality of walls 220-1, 220-2, 220-3, 220-4. The walls 220-1, 220-2, 220-3, 220-4 define the corresponding edges 230-1(1), 230-1(2), 230-1(3), 230-1(4) of the cell 210-1. The walls 220-1, 220-2, 220-3, 220-4 are shared with the adjacent cells 210-2, 210-3, 210-4, 210-5 of the cell 210-1. Specifically, the wall 220-1 is shared between the cells 210-1 and 210-2, the wall 220-2 is shared between the cells 210-1 and 210-3, the wall 220-3 is shared between the cells 210-1 and 210-4, and the wall 220-4 is shared between the cells 210-1 and 210-5. In other words, the wall 220-1 is a common wall of the cells 210-1 and 210-2, the wall 220-2 is a common wall of the cells 210-1 and 210-3, the wall 220-3 is a common wall of the cells 210-1 and 210-4, and the wall 220-4 is a common wall of the cells 210-1 and 210-5.

Further, the walls 220-1, 220-2, 220-3, 220-4 define the edges 230-1(1), 230-1(2), 230-1(3), 230-1(4), respectively, of the polygonal shape PS of the cell 210-1. Specifically, the wall 220-1 defines the edge 230-1(1), the wall 220-2 defines the edge 230-1(2), the wall 220-3 defines the edge 230-1(3), and the wall 220-4 defines the edge 230-1(4) of the cell 210-1.

As shown in Figure 5, the wall 220-1 defines the edge 230-1(1) of the cell 210-1 as well as the edge 230-2(1) of the cell 210-2. The wall 220-2 defines both the edge 230-1(2) of the cell 210-1 as well as the edge 230-3(2) of the cell 210-3. The wall 220-3 defines the edge 230-1(3) of the cell 210-1 as well as the edge 230-4(3) of the cell 210-4. The wall 220-4 defines the edge 230-1(4) of the cell 210-1 as well as the edge 230-5(4) of the cell 210-5.

The wall 220-1 is connected to the adjacent wall 220-2 at the corresponding vertex 240-1(1). The wall 220-2 is connected to the adjacent wall 220-3 at the corresponding vertex 240-1(2). Further, the wall 220-3 is connected to the adjacent wall 220-4 at the corresponding vertex 240-1(3). Additionally, the wall 220-4 is connected to the adjacent wall 220-1 at the corresponding vertex 240-1(4).

Each cell 210-P (P ≤ N) is connected to a set of adjacent cells from the plurality of cells 210 at the corresponding vertices 240-P(j) from the plurality of vertices 240 of the polygonal shape PS, such that each cell 210-P and the set of adjacent cells form a plurality of connections 250-1, 250-2, ..., 250-m (collectively, connections 250) at the corresponding vertices 240-P(j), where m is an integer depending upon the number of walls 220 associated with the polygonal shape PS. The set of adjacent cells may also depend upon the number of walls 220 associated with the polygonal shape PS. In some embodiments, each connection 250-m is formed between each cell 210-P and some adjacent cells from the set of adjacent cells. Further, a set of intersecting walls of each cell 210-P and the some adjacent cells form a corresponding connection 250-q (q ≤ m) from the plurality of connections 250. The connections 250 of each cell 210 may be referred to as 250-q, where q is an integer less than or equal to m (q ≤ m).

In the illustrated embodiment of Figure 5, the cell 210-1 is connected to eight adjacent cells 210-2, 210-3, 210-4, 210-5, 210-6, 210-7, 210-8, 210-9 at four connections 250-1, 250-2, 250-3, 250-4 at corresponding vertices 240-1(1), 240-1(2), 240-1(3), 240-1(4). The number of cells that are adjacent to each cell 210-P may vary based on a position of the cell 210-P in the sealing structure 200. For example, the cells 210 that align with an edge of the sealing structure 200 in the cell plane CP may have a different number of adjacent cells 210. Further, the cells 210 that are located at corners of the sealing structure 200 in the cell plane CP may have a different number of adjacent cells 210. It should be understood that the number of cells that are adjacent each cell 210-P may vary based on the configuration of the sealing structure 200 for different application requirements.

In the illustrated embodiment of Figure 5, the sealing structure 200 further includes walls 220-5, 220-6, 220-7, 220-8, 220-9, 220-10, 220-11, 220-12 adjacent to the cell 210-1.

The connection 250-1 is formed between the cell 210-1 and the adjacent cells 210-2, 210-3, 210-8 from the set of all the adjacent cells 210-2, 210-3, 210-4, 210-5, 210-6, 210-7, 210-8, 210-9. The connection 250-1 is formed by the four intersecting walls 220-1, 220-2, 220-5, 220-6 connected to each other. The walls 220-1, 220-2, 220-5, 220-6 form part of the cells 210-1, 210-2, 210-3, 210-8.

The connection 250-2 is formed between the cell 210-1 and the adjacent cells 210-3, 210-4, 210-7 from the set of all the adjacent cells 210-2, 210-3, 210-4, 210-5, 210-6, 210-7, 210-8, 210-9. The connection 250-2 is formed by the four intersecting walls 220-2, 220-3, 220-11, 220-12 connected to each other. The walls 220-2, 220-3, 220-11, 220-12 form part of the cells 210-1, 210-3, 210-4, 210-7.

The connection 250-3 is formed between the cell 210-1 and the adjacent cells 210-4, 210-5, 210-6 from the set of all the adjacent cells 210-2, 210-3, 210-4, 210-5, 210-6, 210-7, 210-8, 210-9. The connection 250-3 is formed by the four intersecting walls 220-3, 220-4, 220-9, 220-10 connected to each other. The walls 220-3, 220-4, 220-9, 220-10 form part of the cells 210-1, 210-4, 210-5, 210-6.

The connection 250-4 is formed between the cell 210-1 and the adjacent cells 210-2, 210-5, 210-9 from the set of all the adjacent cells 210-2, 210-3, 210-4, 210-5, 210-6, 210-7, 210-8, 210-9. The connection 250-4 is formed by the four intersecting walls 220-1, 220-4, 220-7, 220-8 connected to each other. The walls 220-1, 220-4, 220-7, 220-8 form part of the cells 210-1, 210-2, 210-5, 210-9.

It may be apparent from Figure 5 that each cell 210 and the set of adjacent cells are connected only at the plurality of connections 250. Further, a length of each wall 220 between the respective connections 250 at opposing ends is devoid of any overlap or connection with another wall 220. The sealing structure 200 may be optimized to achieve favourable rubbing and sealing properties during operation of the engine 10 with the polygonal shape PS of the cells 210. Favourable rubbing action may be achieved with this configuration since less material of the walls 220 is provided at the plurality of connections 250 with the adjacent cells and, accordingly, a rubbing contact in the rub direction RD having a lower frictional resistance is possible. Further, in comparison to conventional honeycomb structures, the sealing structure 200 offers lower frictional resistance since the walls 220 are shared between the adjacent cells 210, thereby, eliminating any double-walled structures.

In some embodiments, the quadrilateral shape is a rhombus including a major dimension D1 between two first opposing vertices 240-P(2), 240-P(4) and a minor dimension D2 between two second opposing vertices 240-P(1), 240-P(3), such that the major dimension D1 is greater than the minor dimension D2. Here, P is an integer corresponding to the cell 210-P, where P ≤ N. In Figure 5, D1, D2 is shown in Cell 210-6 for the purpose of illustration. An angle A between the adjacent edges 230-P(1), 230-P(4) or the adjacent edges 230-P(2), 230-P(3) at each of the first opposing vertices 240-P(2), 240-P(4) is from about 45 degrees to about 75 degrees. In the illustrated embodiment of Figure 5, the two first opposing vertices 240-6(2), 240-6(4) corresponding to the cell 210-6 define the major dimension D1. Further, two second opposing vertices 240-6(1), 240-6(3) define the minor dimension D2. The angle A between the adjacent edges 230-6(2), 230-6(3) or the adjacent edges 230-6(1), 230-6(4) at each of the first opposing vertices 240-6(2), 240-6(4) is from about 45 degrees to about 75 degrees.

In some embodiments, each wall 220-k has an average wall thickness T_{w} that is less than or equal to 130 microns. The type of manufacturing process, such as ALM, may allow the average wall thickness T_{w} to be less than or equal to 130 microns. A lower value of the average wall thickness T_{w} may reduce wear of a corresponding sealing portion that rubs against the sealing structure 200. ALM may allow a single-piece manufacturing of the entire sealing structure 200. Thus, a one-piece manufacturing of the array of the cells 210 may be obtained. In some embodiments, the average wall thickness T_{w} of each wall 220 is substantially constant between the corresponding opposite connections 250. For example, the average wall thickness T_{w} of the wall 220-2 may be substantially constant between the corresponding opposite connections 250-1, 250-2.

A rubbing contact between the sealing structure 200 and a sealing portion (e.g., the sealing portion 104 of Figure 2) may occur in the rub direction RD. To obtain favourable rubbing in the rub direction RD as well as favourable sealing properties during operation of the engine 10 (shown in Figure 1), the cells 210 feature a greater extent in the rub direction RD than in a direction orthogonal to the rub direction RD in the cell plane CP. Thus, the amount of material that contacts the sealing portion may reduce significantly as compared to conventional honeycomb structures due to reduction in the thickness of the walls 220 in rubbing contact with the sealing portion.

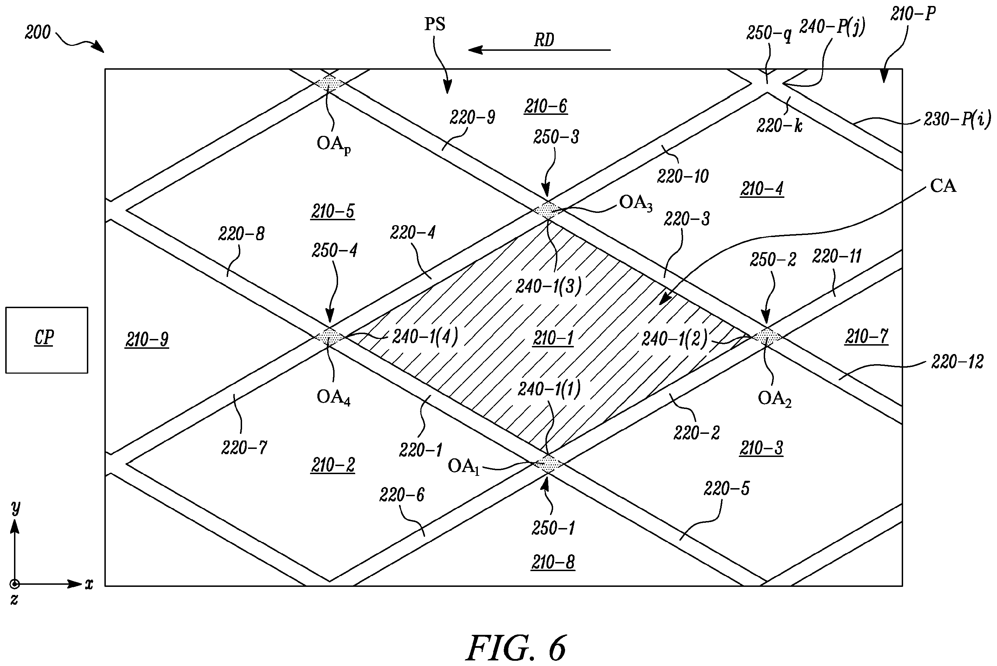

**Figure** 6 is an enlarged sectional top view of a portion of the sealing structure 200. The top view is taken along a plane parallel to the cell plane CP of the sealing structure 200. Some of the cells 210 from the plurality of cells 210 are shown in Figure 6 for the purpose of discussion.

Each cell 210-P (P ≤ N) includes the plurality of walls 220 defining the polygonal shape PS therebetween in the cell plane CP. The polygonal shape PS includes the plurality of edges 230-P(i) and the plurality of vertices 240-P(j). The polygonal shape PS defines a cell area CA in the cell plane CP. Specifically, the cell area CA is bounded by the plurality of edges 230-P(i) and the plurality of vertices 240-P(j) of the corresponding cell 210-P.

Each cell 210-P is connected to a set of adjacent cells from the plurality of cells 210 at corresponding vertices 240-P(j) from the plurality of vertices 240 of the polygonal shape PS, such that each cell 210-P and the set of adjacent cells form the plurality of connections 250-1 to 250-m at the corresponding vertices 240-P(j). Each connection 250-q (q ≤ m) is formed between each cell 210-P and some adjacent cells from the set of adjacent cells. Further, a set of intersecting walls from the plurality of walls 220 of each cell 210-P and the some adjacent cells form the corresponding connection 250-q from the plurality of connections 250.

The set of intersecting walls 220 define an overlap area OAₚ in the cell plane CP at the corresponding connection 250-q, where p is an integer corresponding to q and is less than or equal to m (p ≤ m). A sum of the overlap areas OA₁ to OAₘ at the plurality of connections 250-m is equal to a total overlap area OAₜₒₜₐₗ between each cell 210-P and the set of adjacent cells (i.e., OA₁ + OA₂ ... + OAₘ = OAₜₒₜₐₗ). In other words, the plurality of connections 250-1 to 250-m forms a total overlap area OAₜₒₜₐₗ between each cell 210-P and the set of adjacent cells. The total overlap area OAₜₒₜₐₗ is less than or equal to 10% of the cell area CA.

In the illustrated embodiment of Figure 6, the plurality of walls 220 includes four walls 220-k (k = 1 to 4), such that the polygonal shape PS is a quadrilateral. The cell 210-1 includes the plurality of walls 220-1, 220-2, 220-3, 220-4 defining the polygonal shape PS therebetween in the cell plane CP.

The cell 210-1 is connected to the adjacent cells 210-2, 210-3, 210-4, 210-5, 210-6, 210-7, 210-8, 210-9. The cell 210-1 and the cells 210-2, 210-3, 210-4, 210-5, 210-6, 210-7, 210-8, 210-9 form the plurality of connections 250-1, 250-2, 250-3, 250-4 at the corresponding vertices 240-1(1), 240-1(2), 240-1(3), 240-1(4) of the cell 210-1. Each connection 250-q is formed by four intersecting walls 220.

The four intersecting walls 220-1, 220-2, 220-5, 220-6 form the connection 250-1. Further, the four intersecting walls 220-1, 220-2, 220-5, 220-6 define the overlap area OA₁ in the cell plane CP between the four cells 210-1, 210-2, 210-3, 210-8. Specifically, the overlap area OA₁ is disposed between the intersecting walls 220-1, 220-2, 220-5, 220-6 at the connection 250-1.

The four intersecting walls 220-2, 220-3, 220-11, 220-12 form the connection 250-2. Further, the four intersecting walls 220-2, 220-3, 220-11, 220-12 define the overlap area OA₂ in the cell plane CP between the four cells 210-1, 210-3, 210-4, 210-7. Specifically, the overlap area OA₂ is disposed between the intersecting walls 220-2, 220-3, 220-11, 220-12 at the connection 250-2.

The four intersecting walls 220-3, 220-4, 220-9, 220-10 form the connection 250-3. Further, the four intersecting walls 220-3, 220-4, 220-9, 220-10 define the overlap area OA₃ in the cell plane CP between the four cells 210-1, 210-4, 210-5, 210-6. Specifically, the overlap area OA₃ is disposed between the intersecting walls 220-3, 220-4, 220-9, 220-10 at the connection 250-3.

The four intersecting walls 220-1, 220-4, 220-7, 220-8 form the connection 250-4. Further, the four intersecting walls 220-1, 220-4, 220-7, 220-8 define the overlap area OA₄ in the cell plane CP between the four cells 210-1, 210-2, 210-5, 210-9. Specifically, the overlap area OA₄ is disposed between the intersecting walls 220-1, 220-4, 220-7, 220-8 at the connection 250-4.

In some embodiments, the overlap areas OA₁, OA₂, OA₃, OA₄ have a quadrilateral shape. The shape of the overlap area OAₚ may depend on a shape of the intersecting walls 220 in the cell plane CP. In some embodiments, some of the overlap areas from the overlap areas OA₁, OA₂, OA₃, OA₄ may have a different shape. It should be understood that the shape of the overlap area OAₚ may vary based on application requirements.

The sum of the overlap areas OA₁, OA₂, OA₃, OA₄ at the four connections 250-1, 250-2, 250-3, 250-4 is equal to the total overlap area OAₜₒₜₐₗ between the cell 210-1 and the eight adjacent cells 210-2, 210-3, 210-4, 210-5, 210-6, 210-7, 210-8, 210-9, i.e., OAₜₒₜₐₗ = OA₁ + OA₂ + OA₃ + OA₄. Thus, the total overlap area OAₜₒₜₐₗ is equal to the sum of the overlap areas OA₁, OA₂, OA₃, OA₄.

The total overlap area OAₜₒₜₐₗ is less than or equal to 10% of the cell area CA (i.e., OAₜₒₜₐₗ < 0.1CA). In some embodiments, the total overlap area OAₜₒₜₐₗ is less than or equal to 4% of the cell area CA (i.e., OAₜₒₜₐₗ < 0.04CA). The OAₜₒₜₐₗ is significantly lower as compared to the conventional sealing structures where walls of the cells may overlap to a greater extent. Thus, the sealing structure 200 of the present invention may reduce a rubbing contact between the sealing structure 200 and a sealing portion (e.g., the sealing portion 104), thereby reducing the heat generation and improving the life of the sealing portion.

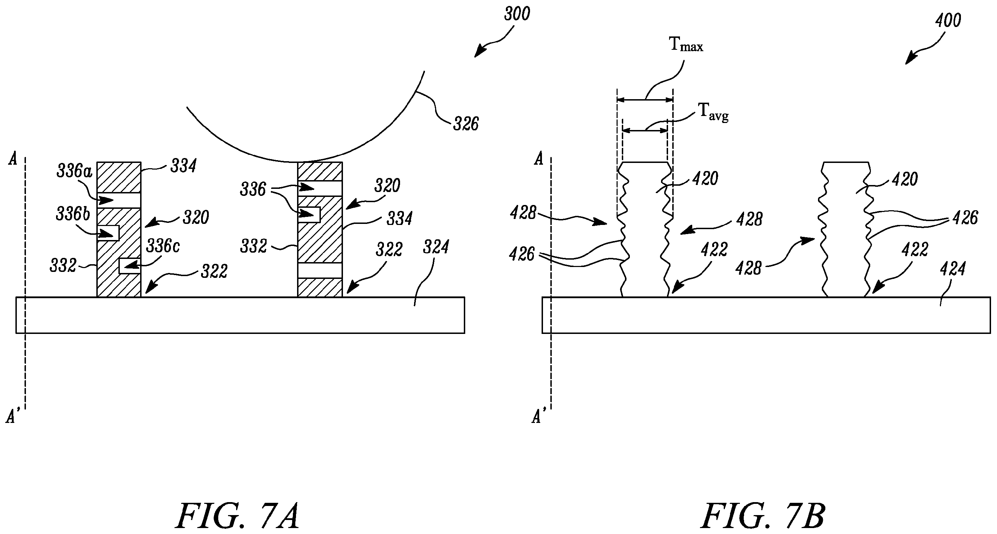

**Figure** 7A illustrates a cross-section of walls 320 of a cell (not shown in Figure 7A) of a sealing structure 300 along the longitudinal axis A-A' in accordance with an embodiment of the present invention. The sealing structure 300 is substantially similar to the sealing structure 200 of Figures 4-6. Figure 7A illustrates two walls 320 spaced apart from each other. One end 322 of the walls 320 is disposed on a plate 324 (equivalent to the plate 128 of Figure 2) of the sealing structure 300.

The sealing structure 300 may be additively manufactured similar to the sealing structure 200. In some embodiments, the walls 320 may be designed to be at least partially deformed in response to a rubbing contact process between the sealing structure 200 and one or more fins 326 of a sealing portion (e.g., the sealing portion 104) during operation of the engine 10 (shown in Figure 1). This may promote fracture wear of the sealing structure 300.

According to the invention, each wall 320 defines a plurality of pores 336 such that the porosity of each wall is from about 5% to about 20% of a total volume of the corresponding wall 320. In some embodiments, each wall 320 of a cell may be defined between the corresponding edges (e.g., the edges 230 shown in Figure 5) and the corresponding connections (e.g., the connections 250 shown in Figures 5 and 6) of the cell.

According to the invention, each wall 320 further defines a first major surface 332 and a second major surface 334 opposite to the first major surface 332. At least one of the plurality of pores 336 of each wall 320 extends at least partially from one of the first and second major surfaces 332, 334 to the other one of the first and second major surfaces 332, 334.

According to the invention and as disclosed in Figure 7A, a pore 336a runs through the wall 320 between the first major surface 332 and the second major surface 334. Thus, a volume of the wall 320 corresponding to the pore 336a is hollow between the first major surface 332 and the second major surface 334. A pore 336b may extend partially from the first major surface 332 towards the second major surface 334. A pore 336c may extend partially from the second major surface 334 towards the first major surface 332. It should be understood that the pores 336 shown in the Figure 7A are exemplary in nature and a length, and a shape or a size of the pores 336 may vary based on application requirements as long as the requirements of the appended claims are fulfilled.

Further, some of the pores 336 may be inclined at an angle with respect to the first major surface 332 and the second major surface 334.

In some embodiments, the material properties of the walls 320 may be modified to promote fracture wear. For example, a material density of the walls 320 may be reduced to improve rubbing behaviour of the sealing structure 300. In some embodiments, the sealing structure 300 may include different material properties at different portions of the sealing structure 300. For example, the material of the walls 320 may be dense and may have high ductility at portions of the sealing structure 300 where relatively higher strength and stiffness is required. Other portions of the sealing structure 300 may be manufactured relatively lighter, such as with lower effective material density, where fracture wear needs to be promoted. In some embodiments, the pores 336 may influence the material density of the walls 320.

Such variation in material properties may be achieved by regulating the parameters of an additive manufacturing process, such as laser energy density, design geometry, etc. In some embodiments, the sealing structure 300 may be integrally manufactured along with the plate 324. Further, the parameters of the additive manufacturing process may be different for the walls 320 and for the plate 324.

**Figure 7B** illustrates a cross-section of walls 420 of a cell (not shown in Figure 7B) of a sealing structure 400 along a longitudinal axis A-A' in accordance with an embodiment of the present invention. Figure 7B illustrates two walls 420 spaced apart from each other. One end 422 of the walls 420 is disposed on a plate 424 (equivalent to the plate 128 of Figure 2) of the sealing structure 400.

In the illustrated embodiment of Figure 7B, the walls 420 include a plurality of thickness variations 426 along at least one major surface 428 of the wall 420 along the longitudinal axis A-A'. In the illustrated embodiment of Figure 7B, the wall 420 includes a pair of opposing major surfaces 428. In some embodiments, the thickness variations 426 may be achieved through partial melting of each major surface 428 of the wall 420. In some embodiments, the thickness variations 426 may be obtained by controlling the parameters of the additive manufacturing process. Partial melting of each major surface 428 may produce irregularities on each major surface 428 leading to variation in thickness of the wall 420. In some embodiments, the thickness variations 426 may produce light zones on the wall 420 promoting fracture wear of the wall 420.

Each wall 420 defines a maximum wall thickness Tₘₐₓ and an average wall thickness T_{avg} along the longitudinal axis A-A'. The maximum wall thickness Tₘₐₓ corresponds to a maximum thickness of the wall 420 along the longitudinal axis A-A'. The average wall thickness T_{avg} may correspond to a nominal thickness of the wall 420.

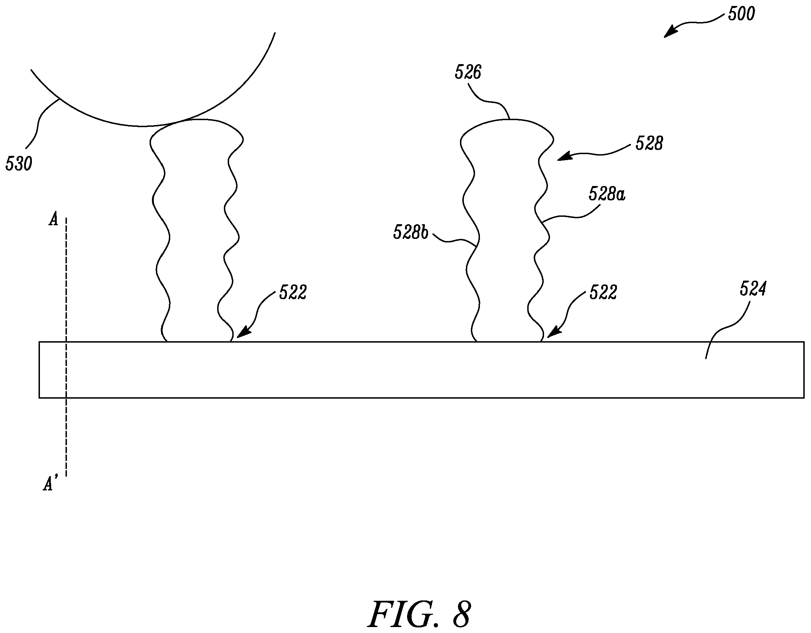

**Figure** 8 illustrates a cross-section of walls 520 of a cell (not shown in Figure 8) of a sealing structure 500 along the longitudinal axis A-A' in accordance with an embodiment of the present invention. Figure 8 illustrates two walls 520 spaced apart from each other. One end 522 of the walls 520 is disposed on a plate 524 (equivalent to the plate 128 of Figure 2).

Each wall 520 includes an interface surface 526 in the cell plane CP (shown in Figures 4-6) configured to interface with one or more fins 530 of a sealing portion (e.g., the sealing portion 104 of Figure 2) disposed adjacent to the sealing structure 500. Each wall 520 further includes at least one major surface 528 along the longitudinal axis A-A'. In some embodiments, the at least one major surface 528 includes a first major surface 528a and an opposing second major surface 528b. In some embodiments, each of the first major surface 528a and the second major surface 528b may have a surface roughness. Further, the thickness of the wall 520 may be less than about 130 microns.

The surface roughness of the first and second major surfaces 528a, 528b may be achieved by controlling the parameters of the additive manufacturing process. The surface roughness may promote weak locations for promoting fracture wear. Thus, the presence of surface roughness may improve the rubbing behaviour, and therefore, may eliminate a need to coat the fins 530 (equivalent to the one or more fins 108 shown in Figure 2) separately for improving a life of the fins. This may reduce a cost of manufacturing a sealing system.

Various features shown in Figures 7A, 7B and 8 may also be enabled in the sealing structures 110, 160, 200 of Figures 2-6.

Referring to Figures 1-8, the sealing structure 110, 160, 200, 400, 500 includes the array of the cells 210 having the polygonal shape PS. The array of the cells 210 includes the plurality of walls 220 such that each wall is shared by two adjacent cells from the plurality of cells 210. Further, each cell 210 is connected to the set of adjacent cells at corresponding vertices 240 only. This may restrict overlap between the adjacent cells. Thus, the sealing structure 110, 160, 200, 400, 500 with the array of the cells 210 may reduce the amount of heat generated during rubbing as compared to conventional seals having double-walled structures where rubbing occurs against a relatively larger amount of material. Further, minimal overlap between the cells 210 may reduce an overall weight of the sealing structure 110, 160, 200, 400, 500.

Reduction in undesirable rubbing may further improve the life of the sealing portion 104, 154 and the one or more fins 108, 326, 530. Thus, the fins 108, 326, 530 may not need additional coating for improving the service life, thereby recuing the overall cost of the sealing system 100.

Use of additive manufacturing processes for producing the sealing structure 110, 160, 200, 400, 500 may allow reduction in the average wall thickness T_{w} of the cells 210. Reduction in the average wall thickness T_{w} may further allow lower heat generation during rubbing contact. Further, the sealing structure 110, 160, 200, 400, 500 may be integrally manufactured using additive manufacturing processes, thereby reducing production time and costs as compared to conventional multi-component sealing parts. Use of additive manufacturing may also permit substantial design flexibility with respect to the types of polygonal shapes that can be manufactured and used with the sealing structure 110, 160, 200, 400, 500.

While the sealing system of the present invention have largely been described above with reference to their use in gas turbine engines, the sealing system may also be used for many other applications that are typically suitable for such seals. For example, the seals are also useful in steam turbine engines, for example, to control air or liquid leakage from high pressure regions to low pressure regions.

## Claims

1. A sealing structure (110, 160, 200, 300, 400, 500) for a gas turbine engine (10), the sealing structure comprising:
a plurality of cells (210) connected to each other, wherein the plurality of cells (210) have a longitudinal axis (A-A') along which they extend and comprise a cell plane (CP) orthogonal to the longitudinal axis (A-A'), wherein each cell (210-P) comprises a plurality of walls (220) extending along the longitudinal axis (A-A'), the plurality of walls (220) defining a polygonal shape (PS) therebetween in the cell plane (CP), wherein the polygonal shape (PS) comprises a plurality of edges (230) and a plurality of vertices (240), the polygonal shape (PS) defining a cell area (CA) in the cell plane (CP), wherein each wall (220-k) defines a corresponding edge (230) from the plurality of edges (230), and wherein each wall (220-k) is connected to an adjacent wall from the plurality of walls (220) at a corresponding vertex (240-P(j)) from the plurality of vertices (240);
wherein each wall (220-k) is shared by two adjacent cells from the plurality of cells (210), such that each wall (220-k) defines corresponding edges (230) of the two adjacent cells; and
wherein each cell (210-P) is connected to a set of adjacent cells from the plurality of cells (210) at corresponding vertices (240-P(j)) from the plurality of vertices (240) of the polygonal shape (PS), such that each cell (210-P) and the set of adjacent cells forms a plurality of connections (250) at the corresponding vertices (240-P(j)), wherein the plurality of connections (250) forms a total overlap area (OAₜₒₜₐₗ) between each cell (210-P) and the set of adjacent cells, and wherein the total overlap area (OAₜₒₜₐₗ) is less than or equal to 10% of the cell area (CA),
**characterized in that**
each wall (320) defines a plurality of pores (336) such that the porosity of each wall (320) is from 5% to 20% of a total volume of the corresponding wall (302), and each wall (320) further defines a first major surface (332) and a second major surface (334) opposite to the first major surface (332), and wherein at least one of the plurality of pores (336) of each wall (320) extends at least partially from one of the first and second major surfaces (332, 334) to the other one of the first and second major surfaces (332, 334) such that a volume of the wall (320) corresponding to a pore (336) is hollow between the first major surface (332) and the second major surface (334).

2. The sealing structure of claim 1, wherein the plurality of walls (220) comprises four walls, such that the polygonal shape (PS) is a quadrilateral comprising four edges and four vertices.

3. The sealing structure of claim 2, wherein the quadrilateral shape is a rhombus comprising a major dimension (D1) between two first opposing vertices (240-P(2), 240-P(4)) and a minor dimension (D2) between two second opposing vertices (240-P(1), 240-P(3)), such that the major dimension (D1) is greater than the minor dimension (D2).

4. The sealing structure of claim 3, wherein an angle (A) between adjacent edges at each of the first opposing vertices (240-P(2), 240-P(4)) is from about 45 degrees to about 75 degrees.

5. The sealing structure of any one of claims 2 to 4, wherein each cell (210-P) is connected to eight adjacent cells at four connections (250), wherein each connection (250-q) is formed by four intersecting walls (220) connected to each other, the four intersecting walls (220) defining an overlap area (OAₚ) in the cell plane (CP) between four cells (210), and wherein a sum of the overlap areas (OAₚ) at the four connections (250) is equal to the total overlap area (OAₜₒₜₐₗ) between each cell (210-P) and the eight adjacent cells.

6. The sealing structure of claim 5, wherein the overlap area (OAₚ) has a quadrilateral shape.

7. The sealing structure of any preceding claim, wherein the total overlap area (OAₜₒₜₐₗ) is less than or equal to 4% of the cell area (CA).

8. The sealing structure of any preceding claim, wherein each wall (220-k) has a planar cross-sectional shape in the cell plane (CP), the planar cross-sectional shape comprising two opposing edges defining the corresponding edges (230) of the two adjacent cells.

9. The sealing structure of any preceding claim, wherein each wall (220-k) has an average wall thickness (T_{w}) less than or equal to 130 microns.

10. The sealing structure of any preceding claim, wherein the plurality of cells (210) is additively manufactured.

11. The sealing structure of any preceding claim, further comprising a plate (128, 324, 424, 524), wherein the plurality of cells (210) is disposed on the plate (128, 324, 424, 524).

12. A sealing system (100, 150) for a gas turbine engine (10), the sealing system comprising:
a rotating part (102, 151) comprising a sealing portion (104, 154); and
a stationary part (120, 157) comprising the sealing structure (110, 160, 200, 300, 400, 500) of any one of the preceding claims, wherein each cell (210) comprises an abradable surface (130, 164) in the cell plane (CP) configured to interface with the sealing portion (104, 154).

13. A gas turbine engine (10) comprising a sealing system (100, 150) of claim 12.

## Patentansprüche

1. Eine Dichtungsstruktur (110, 160, 200, 300, 400, 500) für einen Gasturbinenmotor (10), wobei die Dichtungsstruktur Folgendes umfasst:
eine Vielzahl von Zellen (210), die miteinander verbunden sind, wobei die Vielzahl von Zellen (210) eine Längsachse (A-A') haben, entlang der sie sich erstrecken, und eine zu der Längsachse (A-A') orthogonale Zellenebene (CP) umfassen, wobei jede Zelle (210-P) eine Vielzahl von Wänden (220) umfasst, die sich entlang der Längsachse (A-A') erstrecken, wobei die Vielzahl von Wänden (220) dazwischen in der Zellenebene (CP) eine polygonale Form (PS) definieren, wobei die polygonale Form (PS) eine Vielzahl von Kanten (230) und eine Vielzahl von Spitzen (240) umfasst, wobei die polygonale Form (PS) einen Zellenbereich (CA) in der Zellenebene (CP) definiert, wobei jede Wand (220-k) eine entsprechende Kante (230) aus der Vielzahl von Kanten (230) definiert, und wobei jede Wand (220-k) mit einer benachbarten Wand aus der Vielzahl von Wänden (220) an einer entsprechenden Spitze (240-P(j)) aus der Vielzahl von Spitzen (240) verbunden ist;
wobei jede Wand (220-k) von zwei benachbarten Zellen aus der Vielzahl von Zellen (210) geteilt wird, sodass jede Wand (220-k) entsprechende Kanten (230) der zwei benachbarten Zellen definiert; und
wobei jede Zelle (210-P) mit einem Satz von benachbarten Zellen aus der Vielzahl von Zellen (210) an entsprechenden Spitzen (240-P(j)) aus der Vielzahl von Spitzen (240) der polygonalen Form (PS) verbunden ist, sodass jede Zelle (210-P) und der Satz von benachbarten Zellen eine Vielzahl von Verbindungen (250) an den entsprechenden Spitzen (240-P(j)) bildet, wobei die Vielzahl von Verbindungen (250) einen gesamten Überlappungsbereich (OAₜₒₜₐₗ) zwischen jeder Zelle (210-P) und dem Satz von benachbarten Zellen bilden, und wobei der gesamte Überlappungsbereich (OAₜₒₜₐₗ) kleiner oder gleich 10% des Zellenbereichs (CA) ist,
**dadurch gekennzeichnet, dass** jede Wand (320) eine Vielzahl von Poren (336) definiert, sodass die Porosität jeder Wand (320) von 5% bis 20% eines Gesamtvolumens der entsprechenden Wand (302) beträgt, und jede Wand (320) ferner eine erste Hauptfläche (332) und eine zweite Hauptfläche (334) definiert, die der ersten Hauptfläche (332) entgegengesetzt ist, und wobei mindestens eine der Vielzahl von Poren (336) jeder Wand (320) wenigstens teilweise von einer der ersten und zweiten Hauptflächen (332, 334) zu der anderen von den ersten und zweiten Hauptflächen (332, 334) verläuft, sodass ein einer Pore (336) entsprechendes Volumen der Wand (320) zwischen der ersten Hauptfläche (332) und der zweiten Hauptfläche (334) hohl ist.

2. Die Dichtungsstruktur nach Anspruch 1, wobei die Vielzahl von Wänden (220) vier Wände umfasst, sodass die polygonale Form (PS) ein Viereck ist, das vier Kanten und vier Spitzen umfasst.

3. Die Dichtungsstruktur nach Anspruch 2, wobei die viereckige Form ein Rhombus ist, der eine Hauptabmessung (D1) zwischen zwei ersten einander gegenüberliegenden Spitzen (240-P(2), 240-P(4)) und eine Nebenabmessung (D2) zwischen zwei zweiten einander gegenüberliegenden Spitzen (240-P(1), 240-P(3)) umfasst, sodass die Hauptabmessung (D1) größer ist als die Nebenabmessung (D2).

4. Die Dichtungsstruktur nach Anspruch 3, wobei ein Winkel (A) zwischen benachbarten Kanten an jeder der ersten einander gegenüberliegenden Spitzen (240-P(2), 240-P(4)) von etwa 45 Grad bis etwa 75 Grad beträgt.

5. Die Dichtungsstruktur nach einem der Ansprüche 2 bis 4, wobei jede Zelle (210-P) mit acht benachbarten Zellen an vier Verbindungen (250) verbunden ist, wobei jede Verbindung (250-q) durch vier sich schneidende Wände (220) gebildet wird, die miteinander verbunden sind, wobei die vier sich schneidenden Wände (220) einen Überlappungsbereich (OAₚ) in der Zellenebene (CP) zwischen vier Zellen (210) definieren, und wobei eine Summe der Überlappungsbereiche (OAₚ) an den vier Verbindungen (250) gleich dem gesamten Überlappungsbereich (OAₜₒₜₐₗ) zwischen jeder Zelle (210-P) und den acht benachbarten Zellen ist.

6. Die Dichtungsstruktur nach Anspruch 5, wobei der Überlappungsbereich (OAₚ) eine viereckige Form hat.

7. Die Dichtungsstruktur nach jedem vorhergehenden Anspruch, wobei der gesamte Überlappungsbereich (OAₜₒₜₐₗ) kleiner oder gleich 4% des Zellenbereichs (CA) ist.

8. Die Dichtungsstruktur nach jedem vorhergehenden Anspruch, wobei jede Wand (220-k) eine ebene Querschnittsform in der Zellenebene (CP) hat, wobei die ebene Querschnittsform zwei einander gegenüberliegende Kanten umfasst, die die entsprechenden Kanten (230) der zwei benachbarten Zellen definieren.

9. Die Dichtungsstruktur nach jedem vorhergehenden Anspruch, wobei jede Wand (220-k) eine durchschnittliche Wandstärke (T_{w}) von kleiner oder gleich 130 µm hat.

10. Die Dichtungsstruktur nach jedem vorhergehenden Anspruch, wobei die Vielzahl von Zellen (210) additiv hergestellt ist.

11. Die Dichtungsstruktur nach jedem vorhergehenden Anspruch, ferner umfassend eine Platte (128, 324, 424, 524), wobei die Vielzahl von Zellen (210) auf der Platte (128, 324, 424, 524) angeordnet ist.

12. Ein Dichtungssystem (100, 150) für einen Gasturbinenmotor (10), wobei das Dichtungssystem Folgendes umfasst:
ein rotierendes Teil (102, 151), das einen Dichtungsabschnitt (104, 154) umfasst; und
ein feststehendes Teil (120, 157), das die Dichtungsstruktur (110, 160, 200, 300, 400, 500) nach einem der vorhergehenden Ansprüche umfasst, wobei jede Zelle (210) eine abschleifbare Oberfläche (130, 164) in der Zellenebene (CP) umfasst, die dazu ausgebildet ist, mit dem Dichtungsabschnitt (104, 154) zusammenzuwirken.

13. Ein Gasturbinenmotor (10), der ein Dichtungssystem (100, 150) nach Anspruch 12 umfasst.

## Revendications

1. Une structure d'étanchéité (110, 160, 200, 300, 400, 500) pour un moteur à turbine à gaz (10), la structure d'étanchéité comprenant :
une pluralité de cellules (210) reliées entre elles, dans laquelle la pluralité de cellules (210) ont un axe longitudinal (A-A') le long duquel elles s'étendent et comprennent un plan de cellule (CP) orthogonal à l'axe longitudinal (A-A'), dans lequel chaque cellule (210-P) comprend une pluralité de parois (220) s'étendant le long de l'axe longitudinal (A-A'), la pluralité de parois (220) définissant entre elles une forme polygonale (PS) dans le plan de cellule (CP), dans lequel la forme polygonale (PS) comprend une pluralité d'arêtes (230) et une pluralité de sommets (240), la forme polygonale (PS) définissant une zone de cellule (CA) dans le plan de cellule (CP), dans lequel chaque paroi (220-k) définit une arête correspondante (230) parmi la pluralité d'arêtes (230), et dans lequel chaque paroi (220-k) est connectée à une paroi adjacente de la pluralité de parois (220) à un sommet correspondant (240-P(j)) parmi la pluralité de sommets (240) ;
dans laquelle chaque paroi (220-k) est partagée par deux cellules adjacentes de la pluralité de cellules (210), de sorte que chaque paroi (220-k) définit les arêtes correspondantes (230) des deux cellules adjacentes ; et
dans laquelle chaque cellule (210-P) est connectée à un ensemble de cellules adjacentes de la pluralité de cellules (210) au niveau des sommets correspondants (240-P(j)) de la pluralité de sommets (240) de la forme polygonale (PS), de telle sorte que chaque cellule (210-P) et l'ensemble de cellules adjacentes forme une pluralité de connexions (250) aux sommets correspondants (240-P(j)), dans laquelle la pluralité de connexions (250) forme une zone de recouvrement total (OAₜₒₜₐₗ) entre chaque cellule (210-P) et l'ensemble de cellules adjacentes, et dans laquelle la zone de recouvrement total (OAₜₒₜₐₗ) est inférieure ou égale à 10 % de la zone de cellule (CA),
**caractérisé en ce que** chaque paroi (320) définit une pluralité de pores (336) de telle sorte que la porosité de chaque paroi (320) est comprise entre 5 % et 20 % du volume total de la paroi correspondante (302), et chaque paroi (320) définit en outre une première surface principale (332) et une seconde surface principale (334) opposée à la première surface principale (332), et dans laquelle au moins un des pores (336) de chaque paroi (320) s'étend au moins partiellement d'une des première et seconde surfaces principales (332, 334) à l'autre des première et deuxième surfaces principales (332, 334), de sorte qu'un volume de la paroi (320) correspondant à un pore (336) est creux entre la première surface principale (332) et la seconde surface principale (334).

2. La structure d'étanchéité selon la revendication 1, dans laquelle la pluralité de parois (220) comprend quatre parois, de sorte que la forme polygonale (PS) est un quadrilatère comprenant quatre arêtes et quatre sommets.

3. La structure d'étanchéité de la revendication 2, dans laquelle la forme quadrilatère est un losange comprenant une dimension principale (D1) entre deux premiers sommets opposés (240-P(2), 240-P(4)) et une dimension secondaire (D2) entre deux seconds sommets opposés (240-P(1), 240-P(3)), de sorte que la dimension principale (D1) est supérieure à la dimension secondaire (D2).

4. La structure d'étanchéité selon la revendication 3, dans laquelle un angle (A) entre des arêtes adjacentes au niveau de chacun des premiers sommets opposés (240-P(2), 240-P(4)) est compris entre environ 45 degrés et environ 75 degrés.

5. La structure d'étanchéité selon l'une quelconque des revendications 2 à 4, dans laquelle chaque cellule (210-P) est connectée à huit cellules adjacentes au niveau de quatre connexions (250), dans laquelle chaque connexion (250-q) est formée par quatre parois sécantes (220) reliées entre elles, les quatre parois sécantes (220) définissant une zone de recouvrement (OAₚ) dans le plan de cellule (CP) entre quatre cellules (210), et dans laquelle la somme des zones de recouvrement (OAₚ) au niveau des quatre connexions (250) est égale à la zone de recouvrement total (OAₜₒₜₐₗ) entre chaque cellule (210-P) et les huit cellules adjacentes.

6. La structure d'étanchéité selon la revendication 5, dans laquelle la zone de recouvrement (OAₚ) a une forme quadrilatère.

7. La structure d'étanchéité selon l'une quelconque des revendications précédentes, dans laquelle la zone de recouvrement total (OAₜₒₜₐₗ) est inférieure ou égale à 4 % de la zone de cellule (CA).

8. La structure d'étanchéité selon l'une quelconque des revendications précédentes, dans laquelle chaque paroi (220-k) a une forme de section transversale plane dans le plan de cellule (CP), la forme de section transversale plane comprenant deux bords opposés définissant les arêtes correspondantes (230) des deux cellules adjacentes.

9. La structure d'étanchéité selon l'une quelconque des revendications précédentes, dans laquelle chaque paroi (220-k) a une épaisseur de paroi moyenne (T_{w}) inférieure ou égale à 130 microns.

10. La structure d'étanchéité selon l'une quelconque des revendications précédentes, dans laquelle la pluralité de cellules (210) est fabriquée par fabrication additive.

11. La structure d'étanchéité selon l'une quelconque des revendications précédentes, comprenant en outre une plaque (128, 324, 424, 524), dans laquelle la pluralité de cellules (210) est disposée sur la plaque (128, 324, 424, 524).

12. Un système d'étanchéité (100, 150) pour un moteur à turbine à gaz (10), le système d'étanchéité comprenant :
une partie rotative (102, 151) comprenant une portion d'étanchéité (104, 154) ; et
une partie fixe (120, 157) comprenant la structure d'étanchéité (110, 160, 200, 300, 400, 500) selon l'une quelconque des revendications précédentes, dans laquelle chaque cellule (210) comprend une surface abradable (130, 164) dans le plan de cellule (CP) configurée pour s'interfacer avec la portion d'étanchéité (104, 154).

13. Un moteur à turbine à gaz (10) comprenant un système d'étanchéité (100, 150) selon la revendication 12.
